# FASCICULE DE BREVET EUROPEEN

(11) **EP 1 307 061 B1**
(45) Date de publication et mention de la délivrance du brevet: **13.01.2016**
(21) Numéro de dépôt: 02292631.5
(22) Date de dépôt: 23.10.2002
(51) Int. Cl.: H04W 64/00, H04W 8/08

(54) **Procédé pour le traitement de procédure pour services de localisation en mode paquet dans un système de radiocommunications mobiles**
Verarbeitungsverfahren für Ortungsdienste im Packet-Modus in einem Mobilfunkkommunikationssystem
Method for the management of the localisation services in a packet mode in a radiocommunication mobile system

(30) Priorité: 23.10.2001 FR 0113697; 16.11.2001 FR 0114889
(43) Date de publication de la demande: 02.05.2003
(73) Titulaire: ALCATEL LUCENT, 92100 Boulogne-Billancourt (FR)
(72) Inventeur: Landais, Bruno, 22560 Pleumeur-Bodou (FR); Bourdeaut, Stanislas, 75015 Paris (FR)
(74) Mandataire: El Manouni, Josiane

(56) Documents cités:
- GB-A- 2 355 139
- US-A1- 2001 009 544
- 3GPP TSG GERAN WG2 #6: "Agenda item 7.2.5.9" ETSI, 2001, XP002204709 Aix en Provence, France, October 22-26
- 3GPP ETSI TS 143.059: "Functional stage 2 description of Location Services (LCS) in Geran" 3GPP ETSI, XP002204636
- 'Agenda item 7.2.5.9' 01 Janvier 2001, page 1, XP002204709
- "3rd Generation Partnership Project; Technical Specification Group GSM EDGE Radio Access Network; General Packet Radio Service (GPRS); Base Station System (BSS) - Serving GPRS Support Node (SGSN); BSS GPRS Protocol (BSSGP) (Release 5)", 3GPP STANDARD; 3GPP TS 48.018, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V5.0.0, 1 September 2001 (2001-09-01), pages 1-82, XP050379583,

## Description

La présente invention concerne d'une manière générale les systèmes de radiocommunications mobiles.

La présente invention concerne plus particulièrement les services de localisation pouvant être mis en oeuvre dans ces systèmes, pour déterminer la position géographique des utilisateurs de stations mobiles.

Par exemple, dans le système GSM (« Global System for Mobile communications », de tels services sont appelés LCS (« LoCation Services ») et sont définis notamment dans la spécification 3GPP TS 43.059 publiée par le 3GPP (« 3^{rd} Genration Partnership Project »).

D'une manière générale, dans ces systèmes, on distingue les services en mode circuit et les services en mode paquet. Par exemple, dans le système GSM, les services en mode paquet correspondent à la fonctionnalité GPRS ("General Packet Radio Service"). Les services en mode circuit et les services en mode paquet conduisent à des architectures de système différentes, et à des implémentations différentes pour les services de localisation.

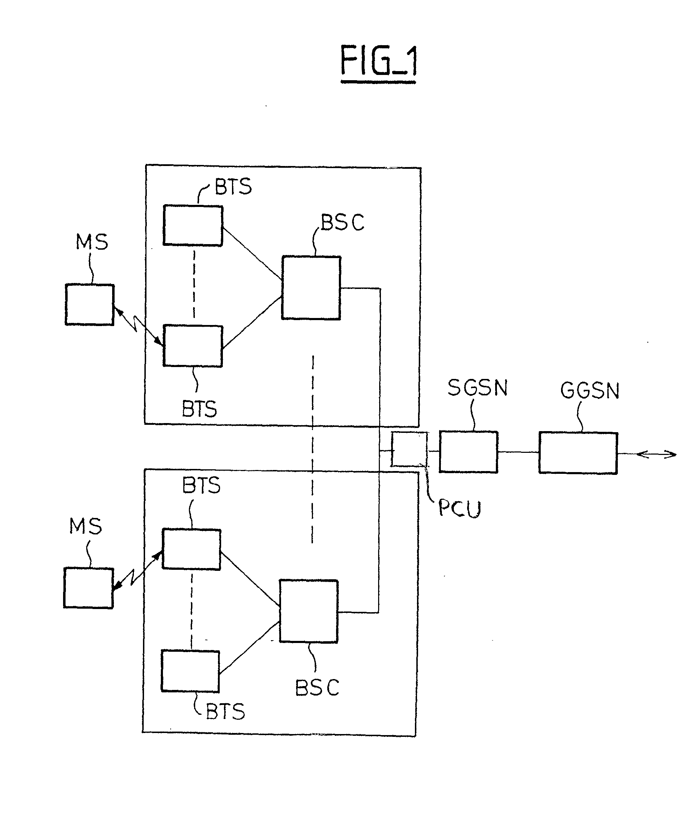

L'architecture d'un système de type GSM/GPRS par exemple est rappelée sur la figure 1. On distingue différents types d'entités ou équipements:
- sous-système de stations de base ou BSS (« Base Station Subsystem »), incluant des stations de base ou BTS ("Base Transceiver Station"), en relation avec des stations mobiles ou MS (« Mobile Station »), et des contrôleurs de stations de base ou BSC (pour "Base Station Controller" en anglais),
- noeud de support GPRS serveur, ou SGSN ("Serving GPRS Support Node"), en relation avec le BSS, et noeud de support GPRS de transit ou GGSN (« Gateway GPRS Support Node »), en relation avec le SGSN et avec des réseaux extérieurs (non illustrés).

Plus généralement, on distingue un réseau d'accès radio, ou RAN (pour « Radio Access Network »), et un coeur de réseau, ou CN (pour « Core Network»).

Par ailleurs, les fonctionnalités du BSS incluent des fonctionnalités communes aux services en mode circuit et aux services en mode paquet, et des fonctionnalités propres aux services en mode paquet. Les fonctionnalités propres aux services en mode paquet correspondent notamment à une entité de type unité de contrôle de paquet ou PCU (pour « Packet Control Unit »). Pour une description des fonctions d'unité de contrôle de paquet (ou « Packet Control Unit »), on pourra se référer notamment à la spécification 3GPP TS 23.060. Des équipements de type PCU peuvent notamment, comme illustré sur la figure 1, être localisés entre des équipements de type BSC et des équipements de type SGSN, un équipement de type PCU pouvant alors, comme illustré sur la figure 1, contrôler plusieurs équipements de type BSC.

Selon l'architecture en couches utilisée pour décrire ces systèmes, on distingue, sur l'interface « Um » entre MS et BSS, par ordre de niveaux croissants:
- une couche GSM RF,
- une couche MAC (« Medium Access Control »,
- une couche RLC (« Radio Link Control »).

De même, on distingue, sur l'interface « Gb » entre BSS et SGSN:
- une couche L1 bis,
- une couche « Network Service »,
- une couche BSSGP (« BSS GPRS Protocol»).

Entre MS et SGSN, une couche supérieure, ou couche LLC (« Logical Link Control ») permet un échange de trames appelées trames LLC, formées à partir d'unités de données de niveau supérieur. Dans les trames LLC ces unités de données sont appelées unités de données LLC-PDU (« LLC-Protocol Data Units »).

Les unités de données LLC-PDU sont ensuite segmentées dans la couche MAC/RLC, de manière à former des blocs appelés blocs de données RLC (« RLC data blocks »). Les blocs de données RLC sont ensuite mis au format requis pour transmission sur l'interface « Um », dans la couche physique.

La couche « Network service » est définie notamment dans la spécification 3GPP TS 48.016. On rappelle que les fonctions réalisées par la couche «Network service » incluent notamment la gestion d'identifiants de connexions virtuelles utilisées pour la communication sur l'interface « Gb » selon le protocole BSSGP (« BSS GPRS Protocol») tel que défini notamment dans la spécification 3GPP TS 48.018. On rappelle qu'une telle connexion virtuelle est identifiée au moyen d'un identifiant d'entité NSE, ou NSEI (pour « Network Service Entity Identifier », et d'un identifiant de connexion virtuelle BSSGP, ou BVCI (pour « BSSGP Virtual Connection Identifier »).

En outre, des protocoles de signalisation de niveau supérieur sont également prévus, notamment pour la gestion des ressources radio ou GRR (« GPRS Radio Resource Management »), la gestion de la mobilité ou GMM (« GPRS Mobility Management»), la gestion de session ou SM (« Session Management»), ...etc.

Notamment, selon le protocole de gestion de ressources radio, différents modes sont possibles pour une station mobile, en mode paquet :
- un mode dit « packet transfer mode », dans lequel des ressources sont allouées temporairement, lorsque des données sont effectivement à transmettre au cours d'une communication, ces ressources formant un canal virtuel temporaire ou TBF (« Temporary Block Flow ») permettant un transfert de données entre station mobile et réseau, pour un sens de transmission donné,
- un mode dit « packet idle mode », dans lequel aucun TBF n'est établi.

Par opposition, en mode circuit, le mode dans lequel des ressources sont allouées à une station mobile est appelé « dedicated mode », ces ressources étant alors des ressources dédiées allouées à la station mobile pour la durée de la communication.

Notamment, selon le protocole de gestion de mobilité, différentes procédures sont prévues selon lesquelles, pendant une session GPRS, dans un état appelé état « Ready », une station mobile MS informe le SGSN de tout changement de cellule, au moyen d'un message de mise à jour de cellule, alors que dans un état appelé état « Standby » une station mobile MS informe le SGSN de tout changement de zone de routage (ou RA, pour « Routing Area »), au moyen d'un message de mise à jour de zone de routage (une zone de routage correspondant à un ensemble de cellules). De même, dans un état appelé état « Idle » en dehors d'une session GPRS, une mise à jour de localisation de la station mobile MS est effectuée si la station mobile change de zone de routage. Ces procédures relatives au protocole de gestion de mobilité permettent ainsi de localiser dans une certaine mesure les stations mobiles (à savoir dans la mesure nécessaire au fonctionnement du système), mais leur précision est très inférieure à celle fournie par les services de localisation, puisqu'elles ne permettent de connaître, au mieux, que la cellule dans laquelle se trouve la station mobile.

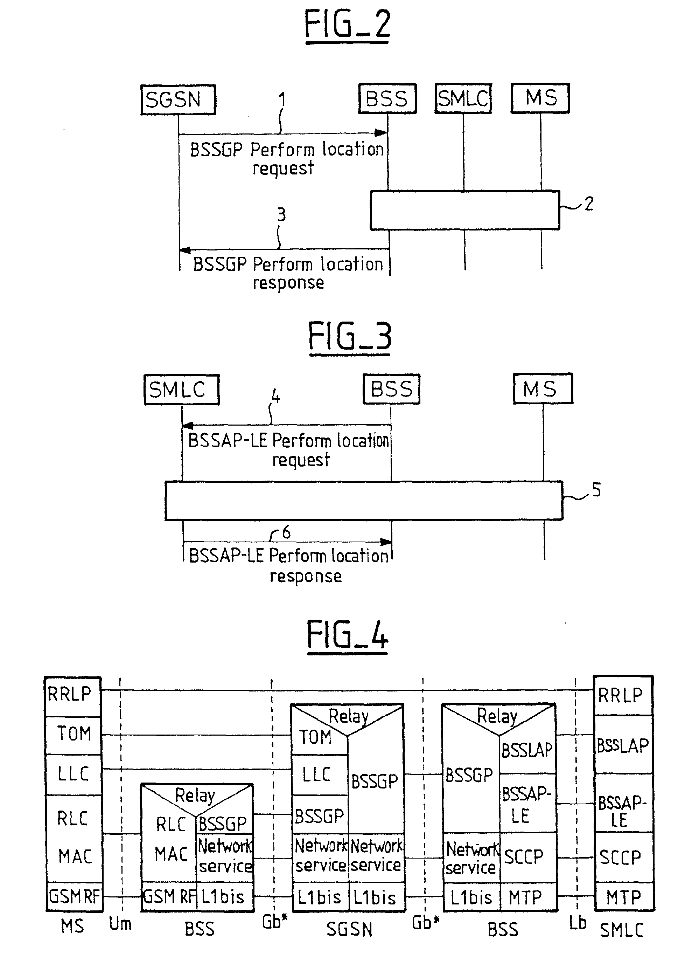

Pour les services en mode paquet, les services de localisation sont mis en oeuvre de la façon suivante, rappelée en relation avec les figures 2 à 5, reprises de la spécification 3GPP TS 43.059 citée précédemment.

Des entités de support de services de localisation sont prévues, telles que notamment, dans le réseau d'accès, une entité SMLC (« Serving Mobile Location Center ») chargée, sur réception d'une requête transmise par une entité du réseau de coeur, de la coordination des différentes actions nécessaires à la fourniture de ces services de localisation telles que: requérir des mesures radio nécessaires à la localisation de la station mobile MS, transmettre les résultats de ces mesures à une fonction de calcul appropriée, recevoir le résultat de cette fonction de calcul, retransmettre ce résultat en réponse à la requête reçue.

Comme rappelé sur la figure 2, pour une station mobile MS à localiser (ou station mobile cible):
- dans une étape 1, le SGSN envoie au BSS une requête de localisation de la station mobile MS, dans un message « BSSGP Perform Location Request »,
- dans une étape 2, une procédure de localisation est mise en oeuvre, cette procédure impliquant des échanges de signalisation entre les entités BSS, SMLC et MS,
- dans une étape 3, le BSS envoie au SGSN sa réponse à la requête de localisation en cours, dans un message « BSSGP Perform Location Response ».

La figure 3 rappelle l'étape de procédure de localisation:
- dans une étape 4, le BSS envoie une requête au SMLC dans un message « BSSAP-LE Perform Location Request»,
- dans une étape 5, le SMLC coordonne les différentes actions nécessaires, incluant notamment l'envoi des messages de signalisation nécessaires,
- dans une étape 6, le SMLC envoie sa réponse au BSS, dans un message « BSSAP-LE Perform Location Response ».

La figure 4 rappelle les couches de protocole utilisées pour supporter la signalisation correspondante entre MS et SMLC. On distingue sur cette figure, dans l'ordre:
- dans la station mobile MS:
   - une couche GSM RF,
   - une couche MAC (« Médium Access Control »,
   - une couche RLC (« Radio Link Control »),
   - une couche LLC (« Logical Link Control »),
   - une couche TOM (« Tunnelisation Of Messages »),
   - une couche RRLP(«Radio Resource LCS Protocol »),
- dans le BSS, à l'interface « Um » avec la station mobile MS:
   - une couche GSM RF,
   - une couche MAC (« Médium Access Control »,
   - une couche RLC (« Radio Link Control »),
- dans le BSS, à l'interface « Gb » avec le SGSN:
   - une couche L1 bis,
   - une couche « Network Service »,
   - une couche BSSGP (« BSS GPRS Protocol»).
- dans le SGSN, à l'interface « Gb » avec le BSS :
   - une couche L1 bis,
   - une couche « Network Service »,
   - une couche BSSGP (« BSS GPRS Protocol»),
   - une couche LLC (« Logical Link Control »),
   - une couche TOM (« Tunnelisation Of Messages ».
      dans le BSS, à l'interface « Gb » avec le SGSN :
   - une couche L1 bis,
   - une couche « Network Service »,
   - une couche BSSGP (« BSS GPRS Protocol»),
- dans le BSS, à l'interface « Lb » avec le SMLC:
   - une couche MTP (« Message Transfer Part »),
   - une couche SCCP (« Signalling Connection Control Part »),
   - une couche BSSAP-LE (« Base Station System Application part - LCS Extension »),
   - une couche BSSLAP (« Base Station System Application Part »),
- dans le SMLC, à l'interface « Lb » avec le BSS :
   - une couche MTP (« Message Transfer Part »),
   - une couche SCCP (« Signalling Connection Control Part »),
   - une couche BSSAP-LE (« Base Station System Application Part - LCS Extension »),
   - une couche BSSLAP (« Base Station System Application Part »),
   - une couche RRLP (« Radio Resource LCS Protocol»).

Sur les interfaces « Gb » et « Um », la signalisation correspondante utilise les resources de signalisation du système GSM/GPRS. Sur l'interface « Lb » entre SMLC et BSS, la signalisation correspondante utilise des ressources spécifiques, prévues spécifiquement pour ces services de localisation.

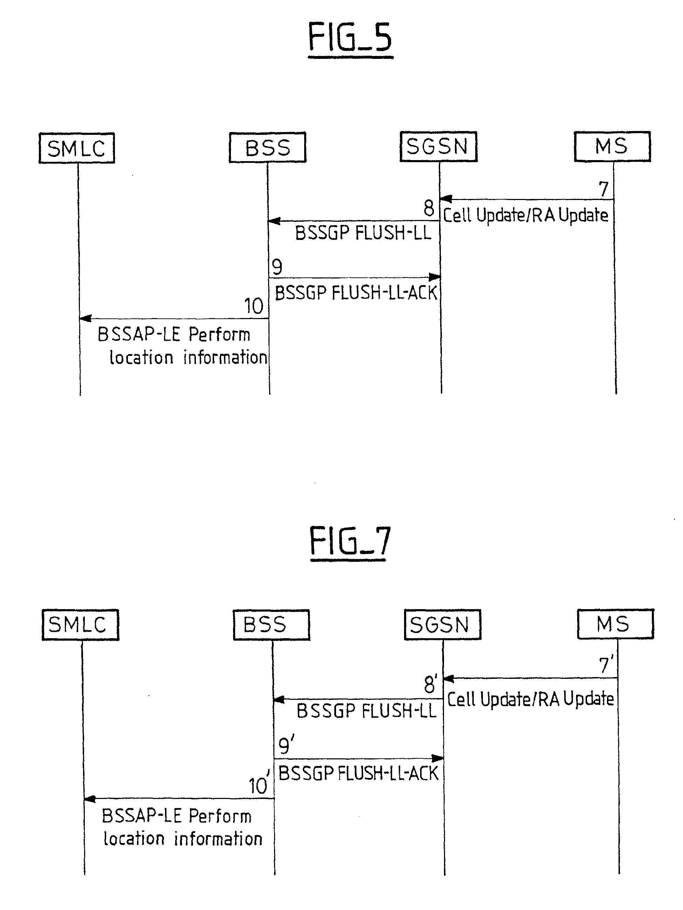

Une procédure est en outre prévue pour tenir un SMLC informé des changements de cellule d'une station mobile pendant l'exécution d'une procédure de localisation. Une telle procédure est rappelée sur la figure 5:
- dans une étape 7, la station mobile MS détecte un changement de cellule et envoie selon le cas un message de mise à jour de cellule (« Cell Update ») ou un message de mise à jour de zone de routage (« Routing Area Update ») au SGSN,
- dans une étape 8, le SGSN envoie un message ou unité de données « BSSGP FLUSH-LL» au BSS ; un tel message est défini dans la spécification 3GPP TS 48.018; il permet un re-routage, dans le sens descendant (à savoir réseau vers stations mobiles) d'unités de données LLC PDU, d'une ancienne cellule (avant changement de cellule) identifiée par une information « BVCI(old)» vers une nouvelle cellule (après changement de cellule) identifiée par une information « BVCI(new)» (« BVCI » étant utilisé pour « BSSGP Virtual Connection Identifier »)
- dans une étape 9, le BSS envoie au SGSN un accusé de réception sous la forme d'un message ou unité de données « BSSGP FLUSH-LL-ACK » (tel que défini également dans la spécification 3GPP TS 48.018),
- dans une étape 10, le BSS envoie au SMLC un message « BSSAP-LE Perform Location Information », ce message contenant l'identification de la nouvelle cellule.

On comprend cependant que l'exécution d'une procédure de localisation ne peut être poursuivie dans tous les cas, et que dans certains cas une telle exécution devrait être suspendue par le SGSN.

Un problème est donc pour le SGSN de déterminer quand l'exécution d'une procédure de localisation en cours devrait être suspendue, dans le cas de changement de cellule.

Une solution à ce problème a été proposée dans le document 3GPP TSG GERAN WG2 #6bis, Aix-en-Provence, France, October 22-26, G2-010232, Agenda item 7.2.5.9. Cette solution consiste simplement à considérer que si le changement de cellule est un changement inter-NSE, alors le SGSN suspend l'exécution de (ou en anglais « abort ») la procédure de localisation en cours.

Ainsi que l'a observé le demandeur, une telle solution a notamment pour inconvénient que suivant la façon dont les cellules sont réparties en différents NSE, ceci peut conduire à une situation où l'exécution d'une telle procédure peut être suspendue à la suite de n'importe quel changement de cellule. Par exemple, ceci peut compromettre toute architecture basée sur des entités NSE distribuées, où l'on peut avoir un nombre relativement grand de NSE par BSS (par exemple parce que les entités NSE sont relativement moins grandes).

L'exécution d'une procédure de localisation en cours devrait être suspendue par le SGNS, notamment dans le cas où le changement de cellule correspond à un changement de BSS (en effet, dans ce cas, le SMLC en charge de la procédure de localisation peut ne plus être le même). Cependant, la seule connaissance de l'identification de la nouvelle cellule ne permet pas au SGSN de déterminer si l'exécution d'une procédure de localisation doit ou non être suspendue. Pour déterminer si cette exécution doit être suspendue, il serait nécessaire que le SGSN ait une connaissance de la répartition des cellules en différents BSS. Or le SGSN n'a pas, au moyen de l'interface « Gb », une vision du BSS, car il gère seulement, via cette interface, des entités NSE (« Network Service Entity »). De plus, la répartition des cellules en différents BSS ne correspond pas nécessairement à la répartition des cellules en différents NSE. Notamment une telle répartition peut être faite suivant des critères d'opération et de maintenance qui peuvent être différents selon que l'on se place d'un point de vue du réseau d'accès (pour le BSS) ou d'un point de vue du coeur de réseau (pour le NSE). Il peut ainsi y avoir un ou plusieurs NSE par BSS.

Ainsi que l'a observé le demandeur, la solution antérieure rappelée ci-dessus peut donc conduire à une situation où l'exécution d'une telle procédure peut être suspendue à la suite de n'importe quel changement de cellule, alors qu'en fait l'objectif est de suspendre cette exécution à la suite d'un changement de BSS.

La présente invention a notamment pour but d'éviter tout ou partie des inconvénients mentionnés précédemment.

Un des objets de la présente invention est un procédé pour le traitement de procédure pour services de localisation en mode paquet dans un système cellulaire de radiocommunications mobiles, ledit système comportant des entités de type sous-système de stations de base BSS (« Base Station Subsystem »), entité de service de réseau NSE ( « Network Service Entity »), noeud de support serveur pour services en mode paquet SGSN (« Serving GPRS Support Node »), procédé dans lequel, dans le cas de changement de cellule inter-NSE, l'exécution d'une procédure de localisation en cours n'est pas suspendue si elle peut être maintenue par le BSS.

Suivant une autre caractéristique, dans le cas de changement de cellule inter-NSE, des informations relatives audit changement de cellule sont transmises par le SGSN au BSS, afin, pour le BSS, si possible, de maintenir l'exécution de ladite procédure.

Suivant une autre caractéristique, lesdites informations relatives à un changement de cellule inter-NSE incluent les informations suivantes:
- « BVCI (new)» (ou identification de la nouvelle cellule, après changement de cellule (« BVCI » étant utilisé pour « BSSGP Virtual Connection Identifier »),
- « NSEI (new) ») (ou identification de nouvelle entité de service NSE, après changement de cellule (« NSEI » étant utilisé pour « Network Service Entity Identifier »).

Suivant une autre caractéristique, lesdites informations relatives à un changement de cellule inter-NSE sont transmises dans un message de type « BSSGP-FLUSH-LL».

Suivant une autre caractéristique, l'envoi par le SGSN au BSS desdites informations relatives à un changement de cellule inter-NSE est utilisé par le BSS pour effectuer un re-routage de contexte de localisation, afin de permettre à ladite procédure de pouvoir être poursuivie, après ledit changement de cellule.

Suivant une autre caractéristique, ledit changement de cellule correspond à un changement de cellule inter-NSE, intra-BSS.

Suivant une autre caractéristique, ledit changement de cellule correspond à un changement de cellule inter-NSE, inter-BSS.

Suivant une autre caractéristique, ledit re-routage de contexte de localisation est effectué de manière interne au BSS.

Suivant une autre caractéristique, ledit re-routage de contexte de localisation est effectué de manière centralisée au niveau du SGSN.

Suivant une autre caractéristique, un transfert d'informations de contexte de localisation est effectué d'un NSE avant changement de cellule, vers un NSE après changement de cellule.

Suivant une autre caractéristique, ledit transfert d'informations de contexte de localisation est effectué entre entités NSE réunies physiquement dans un même équipement.

Suivant une autre caractéristique, une entité de type NSE correspond à une entité de type unité de contrôle de paquet (PCU).

La présente invention a également pour objet un équipement de réseau de radiocommunications mobiles, et un système de radiocommunications mobiles, comportant des moyens adaptés pour mettre en oeuvre un procédé suivant la présente invention.

D'autres objets et caractéristiques de la présente invention apparaîtront à la lecture de la description suivante d'exemples de réalisation, faite en relation avec les figures ci-annexées dans lesquelles:
- la figure 1 (décrite précédemment) est destinée à rappeler l'architecture générale d'un système cellulaire de radiocommunications mobiles du type GSM/GPRS,
- les figures 2, 3, 4 et 5 (décrites précédemment) sont destinées à rappeler la mise en oeuvre d'une procédure de localisation de type LCS (« LoCation Services »), dans un système de type GSM/GPRS, en mode paquet,
- la figure 6 est destinée à illustrer un exemple de configuration de réseau auquel un exemple de réalisation de la présente invention est applicable,
- la figure 7 est destinée à illustrer un exemple de procédé suivant l'invention.

A titre d'exemple, dans ce qui suit, on considère le cas d'une procédure de localisation de type LCS (« LoCation Services »), dans un système de type GSM/GPRS, en mode paquet. On comprend cependant que l'invention n'est pas limitée à un tel exemple.

Suivant un des aspects de l'invention, un exemple de procédé selon l'invention est le suivant :
- Si un changement de cellule inter-NSE se produit pour une station mobile MS cible pendant une procédure de localisation :
   - dans le cas où la procédure LCS en cours peut être maintenue par le BSS pendant le changement de cellule (notamment pendant une re-sélection de cellule), c'est-à-dire dans cet exemple dans le cas de changement de cellule intra-BSS et inter-NSE, le SGSN ne suspend pas l'exécution de la procédure de localisation,
   - dans le cas où la procédure LCS en cours ne peut être maintenue par le BSS pendant le changement de cellule (notamment pendant une re-sélection de cellule), c'est-à-dire dans cet exemple dans le cas de changement de cellule inter-BSS et inter-NSE, le SGSN suspend l'exécution de (ou en anglais « abort ») la procédure de localisation.
- Si un changement de cellule intra-NSE se produit pendant la procédure de localisation, le SGSN ne suspend pas l'exécution de cette procédure.

Suivant un autre aspect de l'invention, le BSS indique au SGSN s'il peut maintenir une procédure de localisation en cours pendant un changement de cellule. Notamment, comme indiqué précédemment, ceci permet au SGSN de déterminer s'il suspend ou non l'exécution de cette procédure de localisation en cours.

Avantageusement, le BSS indique au SGSN s'il peut maintenir ladite procédure pendant un changement de cellule, dans un message de type « BSSGP FLUSH-LL-ACK ».

Par exemple, dans l'exemple illustré sur la figure 7, les étapes 7', 8', 10' peuvent être similaires aux étapes 7, 8, 10 de la figure 5, et dans l'étape 9', le message « BSSGP FLUSH-LL-ACK » transmis par le BSS au SGSN peut être utilisé pour fournir l'indication selon laquelle le BSS peut ou non maintenir la procédure de localisation pendant le changement de cellule.

Le message « BSSGP FLUSH-LL-ACK » contient alors :
- une indication selon laquelle la procédure de localisation en cours est maintenue (ou « maintained » en anglais) ou annulée (ou « cancelled » en anglais).

Dans le cas où la procédure de localisation est maintenue, les informations suivantes peuvent également être incluses dans ce message (si elles sont présentes dans le message « BSSGP-FLUSH-LL » reçu à l'étape 8'):
- « BVCI (new)» (ou identification de la nouvelle cellule, après changement de cellule (« BVCI » étant utilisé pour « BSSGP Virtual Connection Identifier »),
- « NSEI (new) ») (ou identification de nouvelle entité de service NSE, après changement de cellule (« NSEI » étant utilisé pour « Network Service Entity Identifier »).

Pour plus de détails sur les informations « BVCI », « NSEI », « BVCI(new) », « NSEI(new) », on pourra se référer notamment à la spécification 3GPP TS 48.018.

Avantageusement :
- l'information « BVCI(new) » est incluse dans le message « BSSGP FLUSH-LL-ACK » seulement si la procédure de localisation en cours est maintenue,
- l'information « NSEI(new) » est incluse dans le message « FLUSH-LL-ACK » seulement si l'information « BVCI(new) » est incluse et si l'information « NSEI(new) » est reçue dans le message « BSSGP FLUSH-LL ».

Suivant un autre aspect de l'invention, le SGSN fournit au BSS des informations relatives à un changement de cellule inter-NSE, afin pour le BSS, si possible, de maintenir une procédure de localisation en cours.

Notamment, lesdites informations relatives au changement de cellule comportent les informations suivantes, transmises par le SGSN au BSS dans un message de type FLUSH-LL :
- « BVCI (new)» (ou identification de la nouvelle cellule, après changement de cellule (« BVCI » étant utilisé pour « BSSGP Virtual Connection Identifier »),
- « NSEI (new) ») (ou identification de nouvelle entité de service NSE, après changement de cellule (« NSEI » étant utilisé pour « Network Service Entity Identifier »).

Suivant un autre aspect de l'invention, l'invention propose également d'utiliser l'envoi par le SGSN au BSS d'un message « BSSGP FLUSH-LL », effectué selon l'étape 8', non seulement pour re-router des unités de données LLC-PDU descendantes, à la suite d'un changement de cellule (comme cela est actuellement le cas d'après la spécification 3GPP TS 48.018), mais également pour re-router un contexte de localisation (c'est-à-dire un ensemble d'informations relatives à une station mobile pour une procédure de localisation en cours), afin de permettre à la procédure de localisation de pouvoir être poursuivie, après ce changement de cellule.

Dans cet exemple, ce re-routage est interne au BSS: le contexte de localisation n'est pas envoyé par le SGSN d'une entité NSE vers une autre, mais c'est le BSS qui « déplace » lui-même de manière interne ce contexte.

Dans un autre exemple, dans une gestion centralisée au niveau du SGSN, si ces contextes étaient gérés par le SGSN, alors le SGSN pourrait faire un transfert de contexte de localisation en utilisant un message de type « BSSGP FLUSH-LL » ou équivalent.

Suivant un autre aspect de l'invention, l'invention suggère de ne pas suspendre l'exécution d'une procédure de localisation en cours, dans le cas de changement de cellule inter-NSE, inter-BSS, si cette procédure peut être maintenue.

En d'autres termes, il n' est pas nécessaire que le changement de cellule soit un changement de cellule inter-NSE, intra-BSS, pour que la procédure de localisation puisse se poursuivre, dès lors que cette procédure peut être maintenue, ce qui permet d'optimiser encore le procédé.

Suivant un exemple de réalisation, ladite procédure peut être maintenue si une entité fonctionnelle dudit système, correspondant au NSE avant changement de cellule, recevant des informations relatives au changement de cellule, peut assurer un re-routage de contexte de localisation (ou transfert d'informations ou signalisation relatives à la procédure de localisation en cours) vers une entité fonctionnelle dudit système, correspondant au NSE après changement de cellule.

Notamment, ledit transfert est possible entre entités fonctionnelles réunies physiquement dans un même équipement.

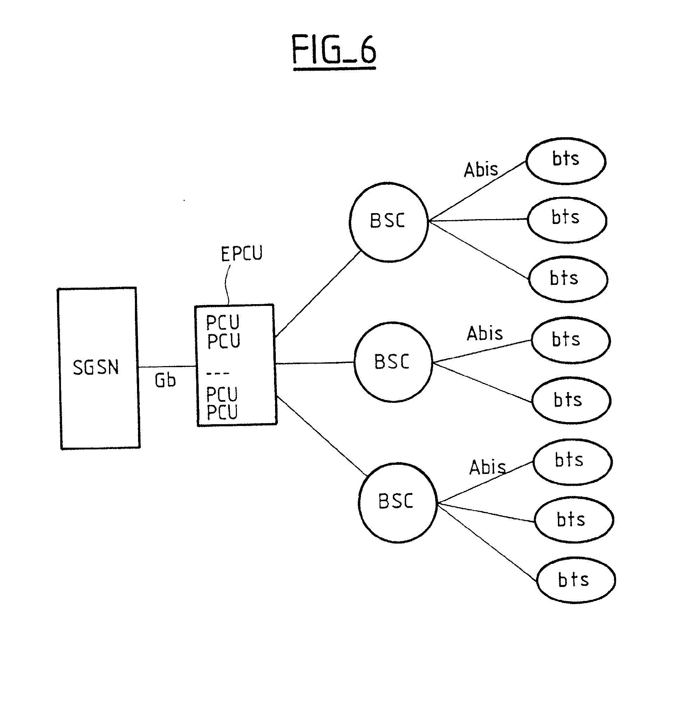

Dans l'exemple illustré sur la figure 6, lesdites entités fonctionnelles sont des unités de contrôle de paquet ou PCU (« Packet Control Unit ») réunies physiquement dans un même équipement noté par exemple EPCU. Dans l'exemple de configuration de réseau illustré sur la figure 6, le réseau comporte ainsi un équipement noté EPCU comportant un ensemble d'unités de contrôle de paquet PCUs, cet équipement noté EPCU étant connecté d'une part à un SGSN via une interface « Gb », et d'autre part à un ensemble de BSC et de BTS.

Notamment, les différents PCUs sont vus par le SGSN comme des entités de service de réseau NSEs, et les ressources disponibles dans ces différents PCUs peuvent être allouées dynamiquement, en fonction des besoins, aux différentes cellules définies dans l'ensemble de BSS considéré.

Selon ces besoins, et selon les changements de cellule possibles pour une station mobile, un changement de cellule peut être un changement:
- intra-NSE
- inter-NSE, intra-BSS,
- inter-NSE, inter-BSS.

Dans le cas intra-BSS, une procédure de localisation en cours peut être maintenue, car le BSS reçoit (selon la figure 5 rappelée précédemment) les informations relatives au changement de cellule, nécessaires pour poursuivre la procédure. Ceci s'applique donc au cas inter-NSE, intra-BSS, mais aussi au cas intra-NSE, qui correspond nécessairement à un cas intra-NSE, intra-BSS.

Dans le cas inter-NSE, inter-BSS, l'invention suggère de ne pas suspendre l'exécution d'une procédure de localisation en cours, si cette procédure peut être maintenue.

Notamment, dans l'exemple illustré sur la figure 6, ladite procédure peut être maintenue si l'entité PCU avant changement de cellule, recevant des informations relatives au changement de cellule, peut assurer un transfert de signalisation relative à la procédure en cours vers l'entité PCU après changement de cellule.

L'invention prévoit en outre que l'envoi par le SGSN au BSS d'un message de type « BSSGP FLUSH-LL », effectué selon l'étape 8 de la figure 5, soit utilisé non seulement pour re-router des unités de données LLC-PDU descendantes, à la suite d'un changement de cellule (comme cela est actuellement le cas d'après la spécification 3GPP TS 48.018), mais également pour re-router un contexte de localisation (c'est-à-dire un ensemble d'informations nécessaires pour permettre l'exécution d'une procédure de localisation en cours pour cette station mobile), afin de permettre à la procédure de localisation de pouvoir être poursuivie, après ce changement de cellule.

Le message « BSSGP-FLUSH-LL » contient notamment les informations suivantes:
- « BVCI (new)» (ou identification de la nouvelle cellule, après changement de cellule (« BVCI » étant utilisé pour « BSSGP Virtual Connection Identifier »),
- « NSEI (new) ») (ou identification de nouvelle entité de service NSE, après changement de cellule (« NSEI » étant utilisé pour « Network Service Entity Identifier »).

En d'autres termes, si un changement de cellule inter-NSE se produit pour une station mobile pendant une procédure de localisation, le SGSN fournit les informations NSEI(new) et BVCI(new) dans le FLUSH-LL PDU envoyé au BSS, afin pour le BSS de maintenir la procédure de localisation en cours, si possible.

En d'autres termes encore, si l'ancien NSE supporte les procédures LCS en GPRS, alors les éléments d'information NSEI (new) et BVCI (new) sont inclus dans le FLUSH-LL PDU dans le cas de changement de cellule inter-NSE.

A partir de ces informations, un équipement tel que par exemple l'équipement EPCU illustré sur la figure 6 peut faire en sorte qu'une procédure de localisation en cours puisse être maintenue, en assurant, de manière interne, un transfert de signalisation échangée selon cette procédure.

Notamment, l'entité PCU associée à NSEI(old) recevant ces informations peut identifier l'entité NSEI(new) et assurer ainsi, de manière interne, un transfert de cette signalisation.

Suivant un exemple, le BSS indique au SGSN si la procédure de localisation en cours est transférée ou non au nouveau NSE, dans le cas de changement de cellule inter-NSE. Le noeud de support serveur pour services en mode paquet (SGSN) suspend ou non l'exécution de la procédure, selon qu'il reçoit une information indiquant que la procédure de localisation en cours a ou non été transférée au nouveau NSE.

Avantageusement, le BSS indique au SGSN s'il peut maintenir ladite procédure pendant un changement de cellule, dans un message de type « BSSGP FLUSH-LL-ACK ».

Par exemple, dans l'exemple illustré sur la figure 7, les étapes 7', 8', 10' peuvent être similaires aux étapes 7, 8, 10 de la figure 5, et dans l'étape 9', le message « BSSGP FLUSH-LL-ACK » transmis par le BSS au SGSN peut être utilisé pour fournir l'indication selon laquelle, dans le cas de changement de cellule inter-NSE, la procédure LCS en cours a été transférée ou non au nouveau NSE.

Le message « BSSGP FLUSH-LL-ACK » contient alors :
- une indication selon laquelle la procédure de localisation en cours est transférée ou non au nouveau NSE, dans le cas d'un changement de cellule inter-NSE.

Dans le cas où la procédure de localisation est transférée, les informations suivantes peuvent également être incluses dans ce message:
- « BVCI (new)» (ou identification de la nouvelle cellule, après changement de cellule (« BVCI » étant utilisé pour « BSSGP Virtual Connection Identifier »),
- « NSEI (new) ») (ou identification de nouvelle entité de service NSE, après changement de cellule (« NSEI » étant utilisé pour « Network Service Entity Identifier »).

Pour plus de détails sur les informations « BVCI », « NSEI », « BVCI(new) », « NSEI(new) », on pourra se référer notamment à la spécification 3GPP TS 48.018.

Avantageusement :
- l'information « BVCI(new) » est incluse dans le message « BSSGP FLUSH-LL-ACK » seulement si la procédure de localisation en cours est transférée au nouveau NSE.

Suivant un autre aspect de l'invention, ladite procédure de localisation incluant des échanges de signalisation entre un BSS serveur, une station mobile (MS) à localiser et une entité de support de services de localisation (SMLC) (comme rappelé en relation avec la figure 3), l'exécution de ladite procédure n'est pas suspendue si la procédure peut être maintenue par ladite entité support de services de localisation.

Cet exemple de réalisation est aussi intéressant dans le cas où la station mobile à localiser passe d'une cellule serveuse à une cellule cible qui sont connectées au même SMLC mais pas au même EPCU.

Notamment, le SMLC peut maintenir la procédure s'il a des informations suffisantes relatives au changement de cellule, pour pouvoir continuer à mettre en oeuvre lesdits échanges de signalisation.

Un exemple de mise en oeuvre possible est le suivant:
- Le SGSN serveur informe un équipement serveur tel que l'équipement EPCU de la figure 6, du changement de NSE, avec les NSEI ancien et nouveau.
- Le EPCU serveur renvoie ces informations au SMLC qui détecte que les cellule cible et serveuse lui sont toutes deux connectées, donc qu'il peut maintenir la procédure.
- Après le changement de cellule, le SGSN demande au SMLC une localisation pour la station mobile, désignée par son n° de IMSI (« International Mobile Subscriber Identity »).
- Le SMLC reconnaît le n° de IMSI de la station mobile et se souvient qu'une procédure est en cours et a été maintenue pour cette station mobile.
- Le SMLC répond alors à la requête de localisation.

D'autres exemples de réalisation de la présente invention, autres que ceux décrits précédemment, seraient bien entendu possibles.

La présente invention a également pour objet un équipement ou entité de réseau de radiocommunications mobiles (tel que notamment SGSN, BSS, PCU, ou encore EPCU tel que noté par exemple sur la figure 6, ou encore SMLC), ainsi qu'un système de radiocommunications mobiles, comportant des moyens adaptés pour mettre en oeuvre un procédé suivant la présente invention, suivant l'un ou l'autre des exemples décrits précédemment.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé pour le traitement de procédure pour services de localisation en mode paquet dans un système cellulaire de radiocommunications mobiles, ledit système comportant des entités de type station mobile (MS), entité de support de services de localisation SMLC (SMLC), sous-système de stations de base BSS « Base Station Subsystem » (BSS), entité de service de réseau NSE « Network Service Entity », noeud de support serveur pour services en mode paquet SGSN « Serving GPRS Support Node » (SGSN), procédé **caractérisé en ce que**, dans le cas de changement de cellule inter-NSE, l'exécution d'une procédure pour services de localisation en cours impliquant le SMLC n'est pas suspendue quand des informations relatives audit changement de cellule sont transmises par le SGSN au BSS, afin de permettre au BSS de maintenir l'exécution de ladite procédure,
lesdites informations relatives à un changement de cellule inter-NSE incluant les informations suivantes:
- « BVCI new», ou identification de la nouvelle cellule, après changement de cellule, « BVCI » étant utilisé pour « BSSGP Virtual Connection Identifier »,
- « NSEI new », ou identification de nouvelle entité de service NSE, après changement de cellule, « NSEI » étant utilisé pour « Network Service Entity Identifier ».

2. Procédé selon la revendication 1, dans lequel, lesdites informations relatives à un changement de cellule inter-NSE sont transmises dans un message de type « BSSGP-FLUSH-LL».

3. Procédé selon l'une des revendications 1 ou 2, dans lequel l'envoi par le SGSN au BSS desdites informations relatives à un changement de cellule inter-NSE est utilisé par le BSS pour effectuer un re-routage de contexte de localisation, afin de permettre à ladite procédure de pouvoir être poursuivie, après ledit changement de cellule.

4. Procédé selon la revendication 3, dans lequel ledit re-routage de contexte de localisation est effectué de manière interne au BSS.

5. Procédé selon la revendication 3, dans lequel ledit re-routage de contexte de localisation est effectué de manière centralisée au niveau du SGSN.

6. Procédé selon la revendication 3, dans lequel un transfert d'informations de contexte de localisation est effectué d'un NSE avant changement de cellule, vers un NSE après changement de cellule.

7. Procédé selon la revendication 6, dans lequel ledit transfert d'informations de contexte de localisation est effectué entre entités NSE réunies physiquement dans un même équipement.

8. Procédé selon l'une des revendications 6 ou 7, dans lequel une entité de type NSE correspond à une entité de type unité de contrôle de paquet PCU (PCU).

9. Système de radiocommunications mobiles, comportant des moyens adaptés pour mettre en oeuvre un procédé selon l'une des revendications 1 à 8.

10. Noeud de support serveur pour services en mode paquet SGSN « Serving GPRS Support Node » (SGSN) pour système cellulaire de radiocommunications mobiles, ledit système comportant des entités de type station mobile (MS), entité de support de services de localisation SMLC (SMLC), sous-système de stations de base BSS « Base Station Subsystem » (BSS), entité de service de réseau NSE « Network Service Entity », noeud de support serveur pour services en mode paquet SGSN « Serving GPRS Support Node » (SGSN), noeud de support serveur pour services en mode paquet **caractérisé en ce qu'**il comporte des moyens pour, dans le cas de changement de cellule inter-NSE, transmettre au BSS des informations relatives audit changement de cellule, afin de permettre au BSS de maintenir l'exécution d'une procédure pour services de localisation en cours impliquant le SMLC, lesdites informations relatives à un changement de cellule inter-NSE incluant les informations suivantes:
- « BVCI new», ou identification de la nouvelle cellule, après changement de cellule, « BVCI » étant utilisé pour « BSSGP Virtual Connection Identifier »,
- « NSEI new », ou identification de nouvelle entité de service NSE, après changement de cellule, « NSEI » étant utilisé pour « Network Service Entity Identifier ».

11. Sous-système de stations de base BSS « Base Station Subsystem » (BSS) pour système cellulaire de radiocommunications mobiles, ledit système comportant des entités de type station mobile (MS), entité de support de services de localisation SMLC (SMLC), sous-système de stations de base BSS « Base Station Subsystem » (BSS), entité de service de réseau NSE « Network Service Entity », noeud de support serveur pour services en mode paquet SGSN « Serving GPRS Support Node » (SGSN), sous-système de stations de base **caractérisé en ce qu'**il comporte des moyens pour, dans le cas de changement de cellule inter-NSE, recevoir d'un noeud de support serveur pour services en mode paquet SGSN des informations relatives audit changement de cellule, afin de permettre au BSS de maintenir l'exécution d'une procédure pour services de localisation en cours impliquant le SMLC, lesdites informations relatives à un changement de cellule inter-NSE incluant les informations suivantes:
- « BVCI new», ou identification de la nouvelle cellule, après changement de cellule, « BVCI » étant utilisé pour « BSSGP Virtual Connection Identifier »,
« NSEI new », ou identification de nouvelle entité de service NSE, après changement de cellule, « NSEI » étant utilisé pour « Network Service Entity Identifier ».

## Patentansprüche

1. Verfahren für die Ablaufverarbeitung von Lokalisationsdiensten im Paketmodus in einem zellularen Mobilfunksystem, wobei das besagte System Einheiten vom Typ Mobilstation (MS), eine Supporteinheit der Lokalisierungseinrichtung (SMLC), ein Basisstationsteilsystem (BSS); eine Netzwerkdiensteinheit (NSE, Network Service Entity) und einen Serving GPRS Support Node (SGSN) umfasst, **dadurch gekennzeichnet, dass** im Falle einer Änderung der zellularen Zwischen-NSE die Ausführung eines Verfahrens für laufende Lokalisationsdienste, welche die SMLC enthalten, nicht abgebrochen wird, wenn Informationen in Bezug auf die zellulare Veränderung durch den SGSN an das BSS übertragen werden, um es dem BSS zu ermöglichen, die Durchführung des besagten Verfahrens aufrechtzuerhalten,
wobei die besagten Informationen bezüglich einer zellularen Veränderung der Zwischen-NSE die folgenden Informationen beinhalten:
- "BVCI new" oder Identifizierung der neuen Zelle nach einer Veränderung der Zelle, wobei "BVCI" für einen "BSSGP Virtual Connection Identifier" steht,
- "NSEI new" oder Identifizierung einer neuen Netzwerkdiensteinheit NSE, nach einer Veränderung der Zelle, wobei "NSEI" für "Network Service Entity Identifier" steht.

2. Verfahren nach Anspruch 1, wobei die besagten Informationen bezüglich einer Veränderung der zellularen Zwischen-NSE in einer Nachricht des Typs "BSSGP-FLUSH-LL" übertragen werden.

3. Verfahren nach einem der Ansprüche 1 oder 2, wobei der Versand via SGSN an das BSS der besagten Informationen bezüglich einer Veränderung der zellularen Zwischen-NSE von dem BSS genutzt wird, um eine Umleitung des Lokalisierungskontextes durchzuführen, um eine Fortsetzung des besagten Verfahrens nach der besagten Veränderung der Zelle zu ermöglichen.

4. Verfahren nach Anspruch 3, wobei die besagte Umleitung des Lokalisierungskontextes intern im BSS ausgeführt wird.

5. Verfahren nach Anspruch 3, wobei die besagte Umleitung des Lokalisierungskontextes zentral auf der SGSN-Ebene ausgeführt wird.

6. Verfahren nach Anspruch 3 bei dem eine Übertragung der Kontextinformationen der Lokalisierung von einer NSE vor der Veränderung der Zelle zu einer NSE nach der Veränderung der Zelle ausgeführt wird.

7. Verfahren nach Anspruch 6, wobei die besagte Übertragung der Kontextinformationen der Lokalisierung zwischen NSE-Einheiten ausgeführt wird, die physisch in einer Ausrüstung vereint sind.

8. Verfahren nach einem der Ansprüche 6 oder 7, wobei eine Einheit vom Typ NSE einer Einheit vom Typ PCU (Packet Control Unit) entspricht.

9. Mobilfunksystem, umfassend angepasste Mittel, um ein Verfahren nach einem der Ansprüche 1 bis 8 bereitzustellen.

10. Serving GPRS Support Node im SGN-Paketmodus für ein zellulares Mobilfunksystem, wobei das besagte System Einheiten vom Typ Mobilstation (MS), eine Supporteinheit der Lokalisierungseinrichtung (SMLC), ein Basisstationsteilsystem (BSS); eine Netzwerkdiensteinheit (NSE, Network Service Entity) und einen Serving GPRS Support Node (SGSN) im SGN-Paketmodus umfasst, **dadurch gekennzeichnet, dass** er Mittel im Falle einer Änderung der zellularen Zwischen-NSE umfasst, Informationen in Bezug auf die zellulare Veränderung der Zwischen-NSE an das BSS überträgt, um es dem BSS zu ermöglichen, die Durchführung eines Verfahrens für die laufenden Lokalisierungsdienste aufrechtzuerhalten, welche die SMLC enthalten, wobei die besagten Informationen bezüglich einer zellularen Veränderung der Zwischen-NSE die folgenden Informationen beinhalten:
- "BVCI new" oder Identifizierung der neuen Zelle nach einer Veränderung der Zelle, wobei "BVCI" für einen "BSSGP Virtual Connection Identifier" steht,
- "NSEI new" oder Identifizierung einer neuen Netzwerkdiensteinheit NSE, nach einer Veränderung der Zelle, wobei "NSEI" für "Network Service Entity Identifier" steht.

11. Basisstationsteilsystem (BSS) für das Mobilfunksystem, wobei das besagte System Einheiten vom Typ Mobilstation (MS), eine Supporteinheit der Lokalisierungseinrichtung (SMLC), ein Basisstationsteilsystem (BSS); eine Netzwerkdiensteinheit (NSE, Network Service Entity), einen Serving GPRS Support Node (SGSN) im SGN-Paketmodus, ein Basisstationsteilsystem umfasst, **dadurch gekennzeichnet, dass** es Mittel umfasst, um im Falle einer Änderung der zellularen Zwischen-NSE von einem Serving GPRS Support Node (SGSN) im SGSN-Paketmodus Informationen in Bezug auf die besagte zellulare Änderung zu erhalten, um es dem BSS zu ermöglichen, die Durchführung eines Verfahrens für die laufenden Lokalisierungsdienste aufrechtzuerhalten, welche die SMLC enthalten, wobei die besagten Informationen bezüglich einer zellularen Veränderung der Zwischen-NSE die folgenden Informationen beinhalten:
- "BVCI new" oder Identifizierung der neuen Zelle nach einer Veränderung der Zelle, wobei "BVCI" für einen "BSSGP Virtual Connection Identifier" steht,
- "NSEI new" oder Identifizierung einer neuen Netzwerkdiensteinheit NSE, nach einer Veränderung der Zelle, wobei "NSEI" für "Network Service Entity Identifier" steht.

## Claims

1. A procedure processing method for packet mode location services in a mobile radio communications cellular system, said system comprising entities of the type mobile station (MS), location services support entity SMLC (SMLC), base station subsystem BSS (BSS), network service entity NSE, and serving GPRS support node SGSN (SGSN), which method is **characterized in that**, in the event of an inter-NSE cell change, a current location services procedure involving the SMLC is not aborted if information regarding said cell change is transmitted by the SGSN to the BSS, in order to enable the BSS to maintain the execution of said procedure,
said information regarding an inter-NSE cell change including the following information:
- "BVCI(new)" identifying the new cell after the cell change, where "BVCI" stands for "BSSGP virtual connection identifier"; and
- "NSEI(new)" identifying the new NSE after the cell change, where "NSEI" stands for "network service entity identifier".

2. A method according to claim 1, in which said information regarding said inter-NSE cell change is transmitted in a "BSSGP-FLUSH-LL" type message.

3. A method according to claim 1 or 2, in which the BSS makes use of the SGSN sending the BSS said information regarding an inter-NSE cell change to reroute a location context so as to enable said procedure to be continued after said cell change.

4. A method according to claim 3, in which said location context rerouting is performed internally within the BSS.

5. A method according to claim 3, in which said location context rerouting is performed in a centralized manner within the SGSN.

6. A method according to claim 3, in which a location context information transfer is performed from an NSE prior to cell change to an NSE after cell change.

7. A method according to claim 6, in which said location context information transfer is performed between NSEs that are united physically within a common piece of equipment.

8. A method according to one of claims 6 or 7, in which an NSE type entity corresponds to a packet control unit (PCU) type entity.

9. A mobile radio communications network equipment comprising means adapted to implement a method according to any one of claims 1 to 8.

10. A serving GPRS support node SGSN (SGSN) for a mobile radio communications cellular system, said system comprising entities of the type mobile station(MS), location services support entity SMLC (SMLC), base station subsystem BSS (BSS), network service entity NSE, and serving GPRS support node SGSN (SGSN), which serving GPRS support node is **characterized in that** it comprises means for, in the event of an inter-NSE cell change, transmitting to the BSS information regarding said cell change, in order to enable the BSS to maintain the execution of a current procedure for location services involving the SMLC, said information regarding an inter-NSE cell change including the following information:
- "BVCI(new)" identifying the new cell after the cell change, where "BVCI" stands for "BSSGP virtual connection identifier"; and
- "NSEI(new)" identifying the new NSE after the cell change, where "NSEI" stands for "network service entity identifier".

11. A base station subsystem (BSS) for a mobile radio communications cellular system, said system comprising entities of the type mobile station (MS), location services support entity SMLC (SMLC), base station subsystem BSS (BSS), network service entity NSE, and serving GPRS support node SGSN (SGSN), which base station subsystem is **characterized in that** it comprises means for, in the event of an inter-NSE cell change, receiving information regarding said cell change from a serving GPRS support node SGSN , in order to enable the BSS to maintain the execution of a current location services procedure involving the SMLC, said information regarding an inter-NSE cell change including the following information:
- "BVCI(new)" identifying the new cell after the cell change, where "BVCI" stands for "BSSGP virtual connection identifier"; and
- "NSEI(new)" identifying the new NSE after the cell change, where "NSEI" stands for "network service entity identifier".
